# EUROPEAN PATENT SPECIFICATION

(11) **EP 2 308 678 B1**
(45) Date of publication and mention of the grant of the patent: **20.06.2012**
(21) Application number: 09012646.7
(22) Date of filing: 06.10.2009
(51) Int. Cl.: B32B 27/32, E04F 15/02

(54) **Decorative sheet for flooring material and method for preparation thereof**
Dekorfolie für Bodenbelag und Verfahren zu ihrer Herstellung
Feuille décorative pour un revêtement du sol et procédé de préparation

(43) Date of publication of application: 13.04.2011
(73) Proprietor: Dai Nippon Printing Co., Ltd., Shinjuku-ku Tokyo 162-8001 (JP)
(72) Inventor: Matsukawa, Yasuhiro, Tokyo 162-8001 (JP); Masuda, Hiroshi, Tokyo 162-8001 (JP); Nakayama, Hiroaki, Tokyo 162-8001 (JP); Kayahara, Toshinari, Tokyo 162-8001 (JP)
(74) Representative: Müller-Boré & Partner Patentanwälte

(56) References cited:
- JP-A- 2004 100 062
- JP-A- 2008 274 738

## Description

The present invention relates to a decorative sheet for floor material, and a decorative material for floor.

Known decorative sheets for floor material contain a decoration sheet in which a decoration layer is provided on a base material sheet, and a synthesis resin backer layer provided on the back surface of the base material sheet. Such decorative sheets are known to have, as a whole, impact resistance, resistance to marring by casters, etc (Patent Document 1, etc.). The backer layer is a relatively thick synthetic resin layer that is capable of decreasing the effects of surface unevenness of the wood base material etc., and helps allow the aforementioned properties to be exhibited.

As the backer layer, polyethylene terephthalate (PET) resin layers, polypropylene (PP) resin layers, etc. have been used. When the backer layer is a PP resin layer, because PP resin layers can be softened at lower temperatures than PET resin layers, emboss patterns on the decoration sheet are not adversely affected. Further, when a base material sheet is also a PP resin layer, the backer layer can be firmly adhered to the back surface of the decoration sheet by means of heat lamination. However, when the heat lamination is performed at a high temperature, the emboss patterns are likely to disappear.

In addition to the heat lamination method described above, the back surface of a decoration sheet can be adhered to a backer layer via an adhesive layer. In this case, however, the adhesion of PP resin layers is problematically lower than that of PET resin layers.

Accordingly, there is still room for further improvement in adhesion when a PP resin layer (backer layer) is adhered to the back surface of a decoration sheet via an adhesive.

### Prior art Document

### Patent Document

Patent Document 1: Japanese Unexamined Patent Publication No. 2005-290736

The present invention relates to a decorative sheet for floor material, in which a synthetic resin layer (backer layer) that is a polypropylene resin layer is adhered to a decoration sheet (decorative sheet intermediate). A primary object of the present invention is to provide a decorative sheet for floor material in which adhesion between a backer layer and a decoration sheet is improved.

As a result of extensive research, the present inventors found that the above object can be achieved by forming a synthetic resin layer from several polypropylene resin layers, and using a polypropylene resin layer having specific properties as a polypropylene resin layer adhered to a decoration sheet. The present invention was thus accomplished.

Specifically, the present invention relates to the following decorative sheet for floor material, and decorative material for floor.
Item 1. A decorative sheet for floor material comprising:
   a decorative sheet intermediate in which one or more layers are laminated on the front surface of a base material sheet, and
   a synthesis resin layer having a thickness of 150 µm or more that is formed on the back surface of the base material sheet via an adhesive layer, wherein
      (1) the synthetic resin layer comprises two or more polypropylene resin layers, and
      (2) of the two or more polypropylene resin layers, the polypropylene resin layer in contact with the base material sheet has a flexural rigidity of 200 to 500 MPa as determined in accordance with JIS K7106.
Item 2. The decorative sheet for floor material according to Item 1, wherein the polypropylene resin layer in contact with the base material sheet has a thickness of 5 to 100 µm.
Item 3. The decorative sheet for floor material according to Item 1 or 2, wherein the decorative sheet intermediate comprises a picture/pattern layer, a transparent adhesive layer, a transparent resin layer, and a transparent surface-protecting layer in this order on the base material sheet.
Item 4. The decorative sheet for floor material according to Item 3, wherein a color-concealing layer is further provided between the base material sheet and the picture/pattern layer.
Item 5. The decorative sheet for floor material according to Item 3 or 4, wherein embossing is performed from the front surface of the transparent surface-protecting layer.
Item 6. A decorative material for floor, wherein the back surface of the decorative sheet for floor material according to any one of Items 1 to 5 is adhered to an adherend.

The decorative sheet for floor material and the decorative material for floor of the present invention are described in detail below.

### Decorative Sheet For Floor Material

The decorative sheet for floor material of the present invention comprises a decorative sheet intermediate in which one or more layers are laminated on the front surface of a base material sheet, and a synthesis resin layer having a thickness of 150 µm or more formed on the back surface of the base material sheet via an adhesive layer. In the decorative sheet for floor material of the present invention, (1) the synthetic resin layer comprises two or more polypropylene resin layers, and (2) of the two or more polypropylene resin layers, the polypropylene resin layer in contact with the base material sheet has a flexural rigidity of 200 to 500 MPa.

The decorative sheet for floor material of the present invention having the above-described characteristics ensures improved adhesion (adhesion property) between the PP resin layer and the base material sheet, because, among the polypropylene (PP) resin layers, the PP resin layer in contact with the base material sheet has a specific property, i.e., a flexural rigidity of 200 to 500 MPa.

Each component of the decorative sheet for floor material of the present invention will be described below.

### Synthetic resin layer

The decorative sheet for floor material of the present invention comprises a synthetic resin layer (backer layer) with a thickness of 150 µm or more on the back surface of the base material sheet via an adhesive layer.

The backer layer is formed of two or more PP resin layers. The PP resin layer in contact with the base material sheet has a flexural rigidity of 200 to 500 MPa, and preferably 300 to 500 MPa. Flexural rigidity is an apparent elastic modulus determined from a bending moment loaded on a cantilever test specimen and its bending angle. Specifically, in the present specification, flexural rigidity is a value measured according to JIS K7106 (measurement sample size: 2 mm (thickness) x 15 mm (width) x 90 mm (length)). In the present specification, because the PP resin layer in contact with the base material sheet improves adhesion, it is sometimes referred to as an easy-adhesion resin layer.

The backer layer may comprise two or more layers, i.e., an easy-adhesion resin layer and other PP resin layer(s). In general, the backer layer comprises two layers. The backer layer may be formed by a co-extrusion film-forming method using molten resin. According to this method, two or more PP resin layers can be easily formed. In an extrusion film-forming method, T dies such as multi-manifold dies and feed block dies can be used.

The thickness of the easy-adhesion resin layer is not particularly limited, but is preferably about 5 to 100 µm, and more preferably about 10 to 40 µm.

### Decorative sheet intermediate

The decorative sheet intermediate comprises one or more layers on the front surface of the base material sheet.

A preferred embodiment of the decorative sheet intermediate comprises at least a picture/pattern layer, an adhesive layer, a transparent resin layer, and a transparent protective layer on the base material sheet, in which the transparent protective layer is provided as the outermost layer. The outermost layer of the decorative sheet may be embossed to provide a concave-convex pattern.

There is no limitation to the layer forming method. For example, each layer may be formed by printing such as gravure printing, flexo printing, silk screen printing, offset printing, transfer printing, etc; coating such as spray coating, roller coating, brush coating, etc.; or laminating a molded article such as a sheet-like material. Among these, the method may be selected in accordance with properties, materials, etc., of the layer.

The thickness of each layer is not limited, and may be suitably determined according to the application, properties, etc., of the final product. The thickness is generally in the range of about 0.1 to 500 µm.

With reference to the above embodiment as a representative example, each layer will be detailed below.

### Base material sheet

On the surface (front surface) of the base material sheet, a picture/pattern layer or the like are laminated in order.

A base material sheet formed of thermoplastic resin is preferably used. Examples of the resins include polyvinyl chloride, polyethylene terephthalate, polybutylene terephthalate, polyamide, polyethylene, polypropylene, polycarbonate, polyethylene naphthalate, ethylene/vinyl acetate copolymer, ethylene/acrylic acid copolymer, ethylene/acrylic ester copolymer, ionomer, acrylic acid ester, methacrylic acid ester, etc.

The base material sheet may be colored. In this case, colorants (pigments or dyes) may be added to the aforementioned thermoplastic resins for coloration. Usable colorants include inorganic pigments such as titanium dioxide, carbon black, iron oxide, etc.; organic pigments such as phthalocyanine blue, etc.; and various dyes. One or more such colorants may be selected from known or commercially available products. The amount of colorants may be determined according to desired color etc.

The base material sheet may contain, as needed, various kinds of additives, such as fillers, matting agents, blowing agents, flame retardants, lubricants, antistatic agents, antioxidants, ultraviolet absorbers, light stabilizers, etc.

The thickness of the base material sheet may be suitably selected in accordance with the application and usage of the final product. In general, the thickness is preferably about 50 to 250 µm.

In order to improve the adhesion property of ink for forming a picture layer, a corona discharge treatment may be performed, as needed, on the surface (front surface) of the base material sheet. Methods and conditions for the corona discharge treatment may be determined according to known methods. If necessary, a corona discharge treatment may be also performed on the back surface of the base material sheet, or a primer layer may be formed on the back surface.

### Picture/pattern layer (picture layer)

The picture layer provides a desired picture (design) with the decorative sheet, and there is no limitation to the kind of picture. Examples of picture include wood grain patterns, stone grain patterns, sand patterns, tile-laying patterns, brick patterns, textile patterns, dermatoglyphic patterns, geometric figures, characters, symbols, abstract patterns, etc.

The method of forming the picture layer is not particularly limited. For example, the picture layer may be formed on the surface of the base material sheet in accordance with a printing method that uses ink obtained by dissolving (dispersing) a known colorant (dye or pigment) together with a binding resin in a solvent (dispersion medium).

Examples of colorants include inorganic pigments such as carbon black, titanium white, zinc white, red oxide, Berlin blue, cadmium red, etc.; organic pigments such as azo pigments, lake pigments, anthraquinone pigments, quinacridone pigments, phthalocyanine pigments, isoindolinone pigments, dioxazine pigments, etc.; metallic powder pigments such as aluminium powder, bronze powder, etc.; pearlescent pigments such as titanium oxide-coated mica, bismuth chloride oxide, etc.; fluorescent pigments; noctilucence pigments; etc. Such colorants may be used singly or in a combination of two or more. The colorants may further contain fillers, e.g., silica; extender pigments, e.g., organic beads; neutralizers; surfactants; etc.

Examples of binding resins include polyester-based urethane resins, hydrophilicated polyester-based urethane resins, polyesters, polyacrylates, polyvinyl acetates, polybutadienes, polyvinyl chlorides, chlorinated polypropylenes, polyethylenes, polystyrenes, polystyrene/acrylate copolymers, rosin derivatives, alcohol adducts of styrene/maleic anhydride copolymers, cellulose-based resins, etc.

More specifically, usable examples include polyurethane-poly acrylic-based resins, polyacrylamide-based resins, poly(meth)acrylate-based resins, polyethylene oxide-based resins, poly N-vinyl-pyrrolidone-based resins, water-soluble polyester-based resins, water-soluble polyamide-based resins, water-soluble amino-based resins, water-soluble phenol-based resins, and other water-soluble synthetic resins; polynucleotides, polypeptides, polysaccharides and like water-soluble natural polymers; etc. Further, natural rubber, synthetic rubber, polyvinyl acetate-based resins, (meth)acrylic-based resins, polyvinyl chloride-based resins, modified or mixed polyurethane-poly acrylic-based resins, and other resins can be used. Such binding resins may be used singly or in a combination of two or more.

Examples of printing methods for forming the picture layer include gravure printing, offset printing, screen printing, flexo printing, electrostatic printing, ink jet printing, etc. When a picture/pattern layer (also referred to as a color-concealing layer) is formed using one color coated over the entire surface, various coating methods such as roll coating, knife coating, air knife coating, dye coating, lip coating, comma coating, kiss coating, flow coating, dip coating, etc. can be used.

In addition to the above, usable examples include hand-drawing methods, marbling methods, photographic methods, transfer methods, laser beam drawing methods, electron beam drawing methods, metal partial deposition methods, etching methods, etc. Such methods may be used in combination with other methods.

The thickness of the picture layer is not particularly limited, and may be suitably determined in accordance with product properties. The thickness of the coated layer may be about 1 to 15 µm, and the thickness of the dried layer may be about 0.1 to 10 µm.

### Adhesive layer

The adhesive layer is provided between a picture layer and a transparent resin layer. Adhesives used in the adhesive layer may be suitably selected depending on the components of the picture layer or the transparent resin layer. For example, various adhesives that contain polyurethane-based resins, poly acrylic-based resins, polycarbonate-based resins, epoxy-based resins, etc. can be used. Further, in addition to reaction-curable adhesives, hot melt adhesives, ionizing radiation-curable adhesives, ultraviolet-curable adhesives, etc. can also be used.

The adhesive layer may be transparent or translucent, as long as the picture layer can be recognized.

In the present invention, an adhesive surface may be subjected to a known easy-adhesion treatment such as corona discharge treatment, plasma treatment, degreasing treatment, surface roughening treatment, etc., if necessary.

The thickness of the adhesive layer varies depending on the kinds of the transparent layer and the adhesive to be used, etc., but is generally about 0.1 to 30 µm.

### Transparent resin layer

The transparent resin layer may be colored as long as it is transparent, and may also be translucent so far as the picture/pattern layer can be observed.

Examples of the usable resins include polyvinyl chloride, polyethylene terephthalate, polybutylene terephthalate, polyamide, polyethylene, polypropylene, ethylene/vinyl acetate copolymer, ethylene/acrylic acid copolymer, ethylene/acrylic ester copolymer, ionomer, polymethylpentene, acrylic acid ester, methacrylic acid ester, polycarbonate, cellulose triacetate, etc. Among these, polypropylene and like polyolefin-based resins are preferable, and polyolefin-based resins having stereoregularity are particularly preferable. When polyolefin-based resins are used, it is desirable that the transparent resin layer be formed by extruding a molten polyolefin-based resin.

The transparent resin layer may contain, as needed, various additives such as fillers, matting agents, foaming agents, flame retardants, lubricants, antistatic agents, antioxidants, UV absorbers, light stabilizers, radical scavengers, soft components (e.g., rubber), etc.

There is no limitation to the thickness of the transparent resin layer, and the thickness is generally in the range about 10 to 150 µm.

### Transparent surface-protecting layer

A transparent surface-protecting layer is formed on the transparent resin layer. It is not generally required, but the transparent surface-protecting layer preferably contains an ionizing radiation-curable resin or a two-component curable urethane-based resin as the resin component. It is preferable that the transparent surface-protecting layer be composed of one or more ionizing radiation-curable resins, or one or more two-component curable urethane-based resins. When the transparent surface-protecting layer is formed out of one or more ionizing radiation-curable resins or one or more two-component curable urethane-based resins, the abrasion resistance, impact resistance, stain resistance, scratch resistance, weather resistance and the like of the decorative sheet can be easily enhanced.

There is no limitation to the ionizing radiation-curable resins. Usable examples thereof include transparent resins comprising, as the main component, one or more prepolymers (including oligomers) and/or one or more monomers that contain in the molecule a radically polymerizable double bond that can undergo the crosslinking polymerization reaction by irradiation of ultraviolet rays, electron beams, or like ionizing radiation. These prepolymers or monomers may be used singly, or in a combination of two or more. The curing reaction is generally conducted through a crosslinking curing reaction.

Specific examples of the prepolymers or monomers are compounds that contain, in the molecule, radically polymerizable unsaturated groups such as (meth)acryloyl group and (meth)acryloyloxy group; cation-polymerizable functional groups such as epoxy group; etc. Furthermore, polyene/thiol-based prepolymers comprising polyene and polythiol in combination are also preferable. In this specification, a (meth)acryloyl group means an acryloyl group or a methacryloyl group.

Examples of the prepolymers comprising a radically polymerizable unsaturated group include polyester (meth)acrylate, urethane (meth)acrylate, epoxy (meth)acrylate, melamine (meth)acrylate, triazine (meth)acrylate, and silicone (meth)acrylate. It is preferable that such prepolymers generally have a molecular weight of about 250 to 100,000.

Examples of monomers comprising a radically polymerizable unsaturated group include monofunctional monomers such as methyl(meth)acrylate, 2-ethylhexyl(meth)acrylate, phenoxyethyl(meth)acrylate, etc. Examples of monomers comprising a radically polymerizable unsaturated group include multifunctional monomers such as diethylene glycol di(meth)acrylate, propylene glycol di(meth)acrylate, trimethylolpropane tri(meth)acrylate, trimethylolpropane ethylene oxide tri(meth)acrylate, dipentaerythritol tetra(meth)acrylate, dipentaerythritol penta(meth)acrylate, dipentaerythritol hexa(meth)acrylate, etc.

Examples of prepolymers comprising a cation-polymerizable functional group include prepolymers of epoxy-based resins such as bisphenol-type epoxy resins, novolac-type epoxy compounds, etc.; and vinyl ether-based resins such as fatty acid-based vinyl ethers, aromatic vinyl ethers, etc. Examples of thiols include polythiols such as trimethylolpropane trithioglycolate, pentaerythritol tetrathioglycolate, etc. Examples of polyenes include polyurethanes formed of diol and diisocyanate, wherein an allyl alcohol is added to each end thereof.

Electromagnetic waves or charged particles with sufficient energy to activate a curing reaction of the molecules in the ionizing radiation-curable resin (composition) are usable as the ionizing radiation to cure the ionizing radiation-curable resin. Ultraviolet rays or electron beams are generally used, and visible light, X-rays, ionic rays and the like may also be used.

Usable examples of ultraviolet ray sources include light sources such as ultra-high pressure mercury lamps, high pressure mercury lamps, low pressure mercury lamps, carbon arc lamps, black lights, metal halide lamps, etc. It is usually preferable that the wavelength of the ultraviolet rays be 190 to 380 nm.

Usable examples of electron beam sources include various types of electron beam accelerators such as Cockcroft-Walton accelerators, Van de Graaff accelerators, resonant transformer-type accelerators, insulated core transformer-type accelerators, linear accelerators, dynamitron accelerators, high frequency-type accelerators, etc. Among these, electron beam accelerators that can irradiate electrons with an energy level of 100 to 1,000 keV, particularly 100 to 300 keV are preferable.

There is no limitation to the two-component curable urethane-based resin, and usable examples of the resins include those comprising a polyol component (e.g., acrylic polyol, polyester polyol, polyether polyol, epoxy polyol, etc.) having a hydroxy group, and those comprising an isocyanate component (e.g., tolylene diisocyanate, hexamethylene diisocyanate, meta-xylene diisocyanate, etc.), which functions as a curing agent component.

The transparent surface-protecting layer may contain, if necessary, plasticizers, stabilizers, fillers, dispersants, colorants (such as dyes and pigments), solvents, etc.

The transparent surface-protecting layer can be formed, for example, by applying an ionizing radiation-curable resin or a two-component curable urethane-based resin on a transparent polypropylene-based resin layer by a known method such as gravure coating, roll coating, etc., followed by curing the resin. When an ionizing radiation-curable resin is used, the resin is cured by irradiating electron beams.

There is no particular limitation to the thickness of the transparent surface-protecting layer, and the thickness thereof may be suitably determined according to the properties required in the final product. The thickness is generally in the range of about 0.1 to 50 µm, and preferably about 1 to 20 µm.

### Embossing

The decorative sheet intermediate may be embossed from the transparent surface-protecting layer side.

The embossing is conducted to provide a decorative sheet with wood grain patterns or like desired texture. The embossing may be conducted, for example, by curing a transparent protective layer on a heated drum by heating; further heating the transparent protective layer to 140 to 170°C using an infrared radiation heater; pressing and shaping the transparent protective layer using an embossing plate having a desired concave-convex pattern; and then solidifying the transparent protective layer by cooling to provide a desired texture. The embossing may be conducted using a known sheet-fed type or rotary embossing machine.

Examples of the concave-convex patterns applied by embossing include wood vessel patterns, patterns formed by using a baren, hairline patterns, grain patterns, pear ground patterns, etc.

When embossing is applied, ink may be filled into the embossing concave portions by wiping as needed. For example, ink may be filled into the embossing concave portions while plowing the surface thereof with a doctor blade. Ink containing a two-component curable urethane resin as a binder is usually usable as the ink to be filled (wiping ink). In particular, by applying a wiping process to the concave-convex pattern with wood vessels, a design more close to actual wood grain can be attained, increasing the value of the product.

In the present invention, the transparent surface-protecting layer may contain other components. For example, solvents, ultraviolet absorbers, antioxidants, dispersants, photostabilizers, gloss-controlling agents, antiblocking agents, lubricants and like additives may be added thereto.

### Adhesion of the synthetic resin layer and the decorative sheet intermediate

The synthetic resin layer is adhered to the decorative sheet intermediate via an adhesive.

Examples of adhesives include various adhesives that contain polyurethane-based resins, poly acrylic-based resins, polycarbonate-based resins, epoxy-based resins, etc.

The thickness of the adhesive layer varies depending on the kind of the adhesive to be used, but is generally about 0.1 to 30 µm.

In the present invention, known easy-adhesion treatments such as corona discharge treatment, plasma treatment, degreasing treatment, surface roughening treatment, etc. can be performed, as needed, on the adhesive surface.

If necessary, a corona discharge treatment may be performed on the back surface (opposite to the adhesive surface) of the synthetic resin layer, or a primer layer may be formed on the back surface.

### Decorative Material For Floor

The decorative sheet for floor material of the present invention may be used as a decorative material for floor by attaching various adherends. There is no particular limitation to the material for the adherends, and inorganic nonmetal-based, metal-based, wood-based, plastic-based and like materials may be used.

Specific examples of the inorganic nonmetal-based materials include non-pottery ceramics materials such as sheet-style cement, extruded cement, slag cement, ALC (autoclaved lightweight concrete), GRC (glassfiber reinforced concrete), pulp cement, wood-chip cement, asbestos cement, calcium silicate, plaster, plaster slag, etc.; and ceramics materials such as earthenware, pottery, porcelain, stoneware, glass, porcelain enamel, etc.

Examples of the metal-based materials include metallic materials (metallic steel plates) such as iron, aluminum, copper, etc.

Examples of the wood-based materials include single plates, plywoods, chipboards, fiberboards, laminated woods and the like formed of Japanese cedar, Japanese cypress, oak, lauan, teak wood, etc.

Examples of the plastic-based materials include resin materials such as polypropylene, ABS resin, phenol resin, etc.

There is no particular limitation to the shape of the adherends. In consideration of their use for flooring, etc., the adherends are usually formed into flat plates.

After being attached to adherends, depending on the desired characteristics of the final product, the materials may be subjected to cutting, formation of rabbets using tenons, formation of V-shaped grooves, chamfering of the four sides, etc.

The decorative sheet for floor material of the present invention ensures improved adhesion (adhesion property) between the PP resin layer and the base material sheet, because, among polypropylene (PP) resin layers, the PP resin layer in contact with the base material sheet has a specific property, i.e., a flexural rigidity of 200 to 500 MPa.

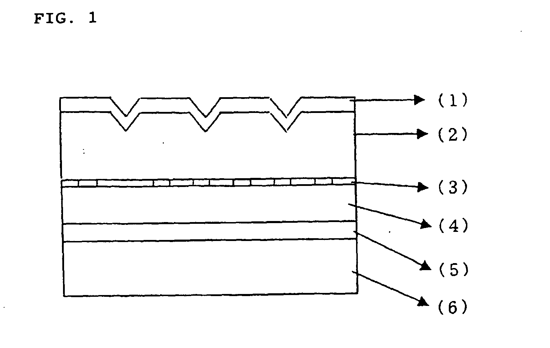

FIG. 1 is a schematic diagram of the decorative sheet for floor material used in Test Example 1.

The present invention is described in detail below with reference to the Examples and Comparative Examples. However, the scope of the present invention is not limited to these examples.

### Examples 1 to 3 and Comparative Examples 1 to 5

### Production of decorative sheet for floor material

A picture/pattern layer (2 µm) was formed on a 0.06 mm-thick colored polypropylene (base material sheet) by means of printing. Subsequently, a 0.08-mm thick transparent polypropylene-based resin film was adhered on the picture/pattern layer using a urethane-based dry laminating adhesive. Thereafter, an electron beam-curable transparent surface-protecting layer (15 µm) was formed on the transparent resin layer. The laminated sheet was embossed from the transparent surface-protecting layer side to thereby obtain a decorative sheet intermediate. A wood vessel pattern about 30 µm in depth was formed by embossing.

The backer layer contained two layers: an easy-adhesion resin layer (30 µm), and a homo PP resin layer (220 µm). The flexural rigidity (JIS K7106) of the easy-adhesion resin layer was as shown in Table 1.

A urethane-based adhesive (18 g/m² wet) was applied to the back surface of the decorative sheet intermediate to adhere to the easy-adhesion resin layer side of the backer layer. The decorative sheet for floor material was thus obtained.

### Production of decorative material for floor

A 12 mm-thick lauan plywood sheet was adhered to the back surface (backer surface side) of the resulting decorative sheet for floor material, thereby obtaining a decorative material for floor. For the application, a urethane-modified ethylene-vinyl acetate-based emulsion adhesive (100 g/m² wet) was used.

**Table 1**

| | Example 1 | Example 2 | Example 3 | Com. Example 1 | Com. Example 2 | Com. Example 3 | Com. Example 4 | Com. Example 5 |
|---|---|---|---|---|---|---|---|---|
| Flexural rigidity of easy-adhesion layer (MPa) | 240 | 470 | 500 | 160 | 530 | 560 | 680 | 780 |
| Interlaminar strength | A | B | B | A | B | B | C | C |
| Wet heat resistance | A | B | B | A | D | D | D | D |
| Pencil hardness | C | B | B | D | C | B | B | B |

### Test Example 1

The decorative material for floor was evaluated for interlaminar strength, wet heat resistance, and pencil hardness. The results are shown in Table 1.

Interlaminar strength denotes the strength of the adhesion between the intermediate sheet and the backer layer. The strength was measured by peeling the intermediate sheet from the backer layer (25 mm in width) 180 degrees relative to the width direction (T-form).

### Measurement results (criteria)

A: 60N or more
B: 40 to 60N
C: 20 to 40N
D: 20N or less

Wet heat resistance was measured by allowing the decorative material to stand in a constant-temperature constant-humidity bath at 80°C with a relative humidity of 90% for 72 hours.

### Measurement results (criteria)

A: 60N or more
B: 40 to 60N
C: 20 to 40N
D: 20N or less

Pencil hardness was measured in the following manner. The testing device was set so that 1,000 g was loaded on the edge of a pencil when the device was in a horizontal position. The decorative material was then scratched using the 3B pencil.

### Measurement results (criteria)

B: No change C: Slight dent D: Dent occurred
(A pencil hardness of "C" is at a practically acceptable level as a product.)

### Explanation of numerals

1. Transparent surface-protecting layer
2. Transparent resin layer
3. Picture/pattern layer or transparent adhesive layer
4. Base material sheet
5. PP synthetic resin layer (Easy-adhesion resin layer)
6. PP synthetic resin layer (Core layer)

## Claims

1. A decorative sheet for floor material comprising:
a decorative sheet intermediate in which one or more layers are laminated on the front surface of a base material sheet, and
a synthesis resin layer having a thickness of 150 µm or more that is formed on the back surface of the base material sheet via an adhesive layer, wherein
(1) the synthetic resin layer comprises two or more polypropylene resin layers, and
(2) of the two or more polypropylene resin layers, the polypropylene resin layer in contact with the base material sheet has a flexural rigidity of 200 to 500 MPa as determined in accordance with JIS K7106.

2. The decorative sheet for floor material according to claim 1, wherein the polypropylene resin layer in contact with the base material sheet has a thickness of 5 to 100 µm.

3. The decorative sheet for floor material according to claim 1 or 2, wherein the decorative sheet intermediate comprises a picture/pattern layer, a transparent adhesive layer, a transparent resin layer, and a transparent surface-protecting layer in this order on the base material sheet.

4. The decorative sheet for floor material according to claim 3, wherein a color-concealing layer is further provided between the base material sheet and the picture/pattern layer.

5. The decorative sheet for floor material according to claim 3 or 4, wherein embossing is performed from the front surface of the transparent surface-protecting layer.

6. A decorative material for floor, wherein the back surface of the decorative sheet for floor material according to any one of claims 1 to 5 is adhered to an adherend.

## Patentansprüche

1. Dekorfolie für Bodenbelag, umfassend
ein Dekorfolien-Intermediat, wobei eine oder mehrere Schichten auf die vordere Oberfläche einer Grundstoff-Folie laminiert sind, und
eine Schicht aus synthetischem Harz mit einer Dicke von 150 µm oder mehr, die auf der hinteren Oberfläche der Grundstoff-Folie durch eine Haftschicht gebildet ist, wobei
(1) die Schicht aus synthetischem Harz zwei oder mehrere Polypropylenharzschichten umfasst und
(2) von den zwei oder mehreren Polypropylenharzschichten die Polypropylenharzschicht in Kontakt mit der Grundstoff-Folie eine Biegefestigkeit von 200 bis 500 MPa, bestimmt gemäß JIS K7106, aufweist.

2. Dekorfolie für Bodenbelag nach Anspruch 1, wobei die Polypropylenharzschicht in Kontakt mit der Grundstoff-Folie eine Dicke von 5 bis 100 µm aufweist.

3. Dekorfolie für Bodenbelag nach Anspruch 1 oder 2, wobei das Dekorfolien-Intermediat eine Bild-/Musterungs-Schicht, eine transparente Haftschicht, eine transparente Harzschicht und eine transparente Oberflächen-schützende Schicht, in dieser Reihenfolge, auf der Grundstoff-Folie aufweist.

4. Dekorfolie für Bodenbelag nach Anspruch 3, wobei sich weiterhin eine farbverdeckende Schicht zwischen der Grundstoff-Folie und der Bild-/Musterungs-Schicht befindet.

5. Dekorfolie für Bodenbelag nach Anspruch 3 oder 4, wobei das Prägen an der vorderen Oberfläche der transparenten Oberflächen-schützenden Schicht durchgeführt wird.

6. Dekormaterial für Boden, wobei die hintere Oberfläche der Dekorfolie für Bodenbelag nach einem der Ansprüche 1 bis 5 an einen Adhärenden angeklebt ist.

## Revendications

1. Feuille décorative pour matériau de sol, comprenant :
une feuille décorative intermédiaire dans laquelle une ou plusieurs couches sont stratifiées sur la surface avant d'une feuille en matériau de base, et
une couche en résine de synthèse ayant une épaisseur supérieure ou égale à 150 µm, qui est formée sur la surface arrière de la feuille en matériau de base par l'intermédiaire d'une couche adhésive, dans laquelle
(1) la couche en résine synthétique comprend deux ou plus de deux couches de résine de polypropylène, et
(2) parmi les deux ou plus de deux couches de résine de polypropylène, la couche de résine de polypropylène en contact avec la feuille en matériau de base possède une rigidité à la flexion de 200 MPa à 500 MPa, telle que déterminée selon la norme JIS K7106.

2. Feuille décorative pour matériau de sol selon la revendication 1, dans laquelle la couche de résine de polypropylène en contact avec la feuille en matériau de base possède une épaisseur de 5 µm à 100 µm.

3. Feuille décorative pour matériau de sol selon la revendication 1 ou 2, dans laquelle la feuille décorative intermédiaire comprend une couche à image/motif, une couche adhésive transparente, une couche de résine transparente et une couche transparente de protection de surface dans cet ordre sur la feuille en matériau de base.

4. Feuille décorative pour matériau de sol selon la revendication 3, dans laquelle une couche de masquage de couleur est en outre formée entre la feuille en matériau de base et la couche à image/motif.

5. Feuille décorative pour matériau de sol selon la revendication 3 ou 4, dans laquelle un gaufrage est réalisé à partir de la surface avant de la couche transparente de protection de surface.

6. Matériau décoratif pour sol, dans lequel la surface arrière de la feuille décorative pour matériau de sol selon l'une quelconque des revendications 1 à 5 est collée sur un substrat.
